# EUROPÄISCHE PATENTSCHRIFT

(11) **EP 2 840 880 B1**
(45) Veröffentlichungstag und Bekanntmachung des Hinweises auf die Patenterteilung: **24.08.2016**
(21) Anmeldenummer: 13719064.1
(22) Anmeldetag: 22.04.2013
(51) Int. Cl.: A01B 63/16

(54) **GEZOGENES LANDWIRTSCHAFTLICHES GERÄT**
DRAWN AGRICULTURAL MACHINE
MACHINE AGRICOLE TRACTÉE

(30) Priorität: 24.04.2012 DE 102012103570
(43) Veröffentlichungstag der Anmeldung: 04.03.2015
(73) Patentinhaber: Amazonen-Werke H. Dreyer GmbH & Co. KG, 49205 Hasbergen (DE)
(72) Erfinder: FRIEL, Holger, 19288 Glaisin (DE); FRIEL, Wilhard, 19288 Glasin (DE); SCHLEGEL, Christoph, 18057 Rostock (DE)
(86) Internationale Anmeldenummer: PCT/EP2013/058237
(87) Internationale Veröffentlichungsnummer: WO 2013/160215

(56) Entgegenhaltungen:
- DE-A1-102006 014 134
- US-A- 4 304 090
- US-A- 4 463 546
- US-A1- 2010 084 149

## Beschreibung

Die Erfindung betrifft ein gezogenes landwirtschaftliches Gerät gemäß des Oberbegriffes des Patentanspruches 1.

Ein derartiges gezogenes landwirtschaftliches Gerät ist in der DE 10 2006 014 134 A1 beschrieben. Bei diesem als Bodenbearbeitungsgerät ausgebildetem Gerät sind auf der Vorderseite sogenannte Tiefenführungsräder mit einer Schwenkhalterung um eine aufrechte Achse frei schwenkbaren angeordnet. Hierbei weist der Radarm, über den die Tiefenführungsräder mit der schwenkbar Halterung verbunden sind, eine Abwinklung zur Schwenkachse auf, so dass die Tiefenführungsräder während des Betriebes gegenüber der Schwenkachse nacheilen. Die Drehachse der Tiefenführungsräder befindet sich also während der Arbeit hinter der Schwenkachse. Durch diese Ausgestaltung der Halterung muss die Halterung relativ weit vor dem Rahmen des Gerätes angeordnet sein. Dies erfordert also einen erhöhten nach vorn ragenden Bauraum des Gerätes.

Der Erfindung liegt die Aufgabe zu Grunde, eine vereinfachte und eine einen geringeren Bauraum benötigende Anordnung für die Tiefenführungsrädern vorzuschlagen.

Diese Aufgabe wird erfindungsgemäß durch die Merkmale des Anspruchs 1 gelöst.

Infolge dieser Maßnahme befindet sich die Halterung mit der die Schwenkachse aufweisenden Schwenkhalterung zur Anordnung der Tiefenführungsräder am Geräterahmen während des Arbeitseinsatzes hinter der Drehachse der Tiefenführungsräder. Hierdurch wird eine kompakte und platzsparende Ausgestaltung der Anordnung der Tiefenführungsrädern am Geräterahmen erreicht.

Die Tiefenführungsräder sind mittels einer eine horizontale Drehachse aufweisenden Lagerung an der Schwenkhalterung befestigt. Hierbei liegt die horizontale Drehachse der Tiefenführungsräder in der Ebene der Schwenkachse oder vor der Ebene der Schwenkachse. Es ergibt sich so eine sehr einfache Ausgestaltung der Schwenkhalterung.

Um sicherzustellen, dass die Tiefenführungsräder während der Arbeit eine stabile Laufstellung einnehmen, ist vorgesehen, dass die Neigung der schrägen Schwenkachse zumindest 30°, vorzugsweise ca. 37° zur Vertikalen beträgt.

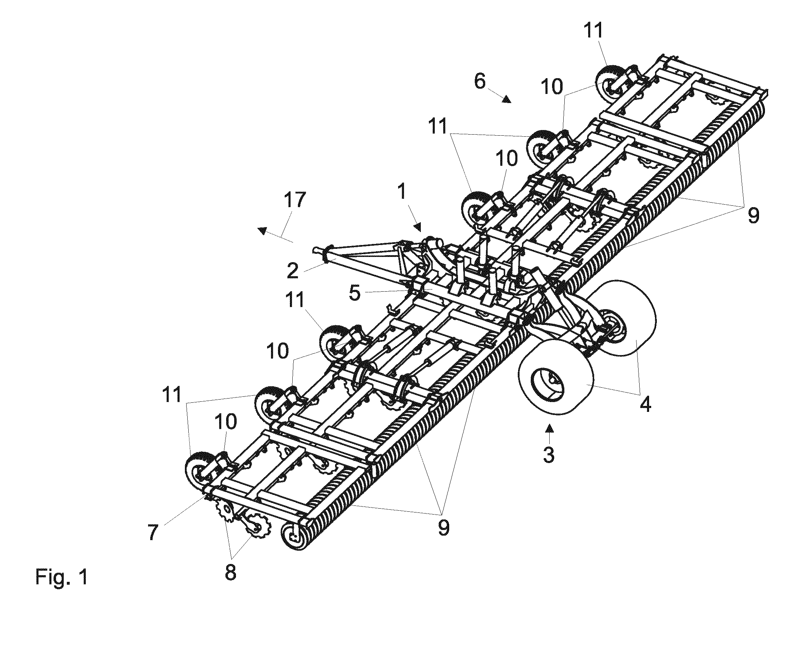

Weitere Einzelheiten der Erfindung sind der Beispielsbeschreibung zu entnehmen. Die Zeichnungen zeigen
- Fig.1: das als Bodenbearbeitungsgerät großer Arbeitsbreite ausgebildete gezogene landwirtschaftliche Arbeitsgerät in Arbeitsstellung und in perspektivischer Darstellung und

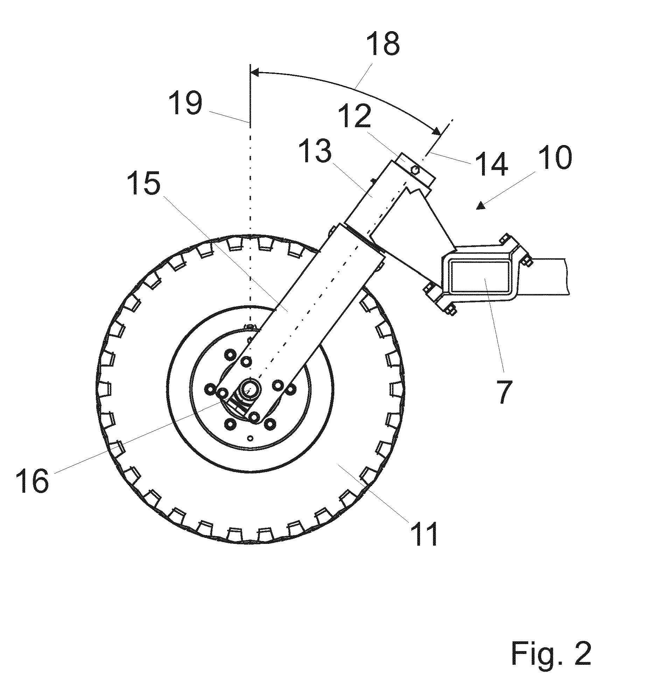

- Fig.2: die Anordnung eines Tiefenführungsrades in Seitenansicht und im vergrößerten Maßstab.

Das gezogene landwirtschaftliche Arbeitsgerät großer Arbeitsbreite ist als Bodenbearbeitungsgerät ausgebildet. Das Bodenbearbeitungsgerät weist eine Arbeitsbreite von 17 m auf. Das Bodenbearbeitungsgerät weist einen Tragrahmen 1 auf. An dem Tragrahmen 1 ist auf dessen Vorderseite eine Zugdeichsel 2 zur Ankoppelung an eine Zugvorrichtung eines Ackerschleppers angeordnet. Auf der Rückseite des Tragrahmens 1 ist ein höhenverstellbares Fahrwerk 3 mit den Laufrädern 4 angeordnet. An dem Tragrahmen 1 des Bodenbearbeitungsgerätes ist der Mittelrahmen 5 befestigt. An dem als Mittelrahmen 5 ausgebildeten Tragrahmen 1 schließen sich beidseitig jeweils mehrere Flügelabschnitte 6 an.

An den Rahmen 7 dieser Flügelabschnitte 6 sind den Boden lockernde Bodenbearbeitungswerkzeuge 8 angeordnet. Hinter den Bodenbearbeitungswerkzeugen 8 sind die die Bodenbearbeitungswerkzeuge 8 in der Tiefe führenden Bodenwalzen 9 angeordnet.

Seitlich neben der Deichsel 2 und auf der Vorderseite der Rahmen 7 sind der Flügelabschnitte 6 sind jeweils mittels einer Schwenkhalterung 10 die Tiefenführungsräder 11 angeordnet. Die Schwenkhalterung 10 weist einen Schwenkbolzen 12, der in einer Schwenklagerung 13 der Schwenkhalterung 11 um eine schräg von hinten - oben nach vorn - unten verlaufenden Schwenkachse 14 schwenkbar angeordnet ist.

An dem Schwenkbolzen 12 ist der schräg nach unten ragende Radarm 15 befestigt. Der Radarm 15 ist mit dem Schwenkbolzen 12 verschwenkbar. Der Radarm 15 ist ebenfalls schräg von hinten - oben nach vorn - unten verlaufend angeordnet, und zwar entsprechend dem Verlauf der Schwenkachse 14 angepasst ausgerichtet, wie die Zeichnung zeigt. Am unteren Ende des Radarmes 15 ist mittels einer eine horizontale Drehachse 16 aufweisenden Lagerung das Tiefenführungsrad 11 befestigt. Die horizontale Drehachse 16 des Tiefenführungsrades 11 liegt in der Ebene der Schwenkachse 14, um welche das Tiefenführungsrad 11 verschwenkbar ist. Es ist auch möglich, dass die horizontale Drehachse 16 des Tiefenführungsrades 11 in Fahrtrichtung 17 gesehen vor der Schwenkachse 14 liegt. Die Neigung 18 der schrägen Schwenkachse 14 beträgt zumindest 30°, im Ausführungsbeispiel 37° zur Vertikalen 19.

## Patentansprüche

1. Gezogenes landwirtschaftliches Gerät mit an einem Rahmen angeordneten Bearbeitungswerkzeugen, einer Zugdeichsel, seitlich neben der Deichsel und vor den Bearbeitungswerkzeugen am Rahmen in aufrechter Ebene bewegbar angeordneten Tiefenführungsrädern zur Höhenführung des Rahmens und Bearbeitungswerkzeuge gegenüber dem Boden, wobei die Tiefenführungsräder mit einer Schwenkhalterung um eine aufrechte Achse frei schwenkbar angeordnet sind und wobei die Schwenkachse (14) für die Tiefenführungsräder (11) schräg von hinten - oben nach vorn - unten ausgerichtet verläuft
**dadurch gekennzeichnet, dass**
die Tiefenführungsräder mittels einer eine horizontale Drehachse (16) aufweisenden Lagerung (13) an der Schwenkhalterung (10) befestigt sind, wobei die horizontale Drehachse (16) der Tiefenführungsräder (11) in der Ebene der Schwenkachse (14) oder vor der Ebene der Schwenkachse (14) liegt.

2. Gerät nach Anspruch 1, **dadurch gekennzeichnet, dass** die Neigung (18) der schrägen Schwenkachse (14) zumindest 30°, vorzugsweise ca. 37° zur Vertikalen (19) beträgt.

## Claims

1. Drawn agricultural implement with cultivating tools arranged on a frame, a drawbar, and depth guiding wheels, which are arranged moveably in a vertical plane laterally next to the drawbar and upstream of the cultivating tools on the frame, for guiding the height of the frame and cultivating tools in relation to the ground, wherein the depth guiding wheels are arranged with a pivoting holder so as to be freely pivotable about a vertical axis, and wherein the pivot axis (14) for the depth guiding wheels (11) runs oriented obliquely from the rear at the top to the front at the bottom, **characterized in that** the depth guiding wheels are fastened to the pivoting holder (10) by means of a bearing (13) having a horizontal axis of rotation (16), wherein the horizontal axis of rotation (16) of the depth guiding wheels (11) lies in the plane of the pivot axis (14) or upstream of the plane of the pivot axis (14).

2. Implement according to Claim 1, **characterized in that** the inclination (18) of the oblique pivot axis (14) is at least 30°, preferably approx. 37°, with respect to the vertical (19).

## Revendications

1. Machine agricole tractée comprenant des outils de traitement disposés sur un châssis, un timon de traction, des roues de guidage en profondeur disposées de manière mobile dans le plan vertical latéralement à côté du timon et avant les outils de traitement sur le châssis, pour le guidage en hauteur du châssis et des outils de traitement par rapport au sol, les roues de guidage en profondeur étant disposées de manière à pouvoir pivoter librement autour d'un axe vertical avec une fixation pivotante et l'axe de pivotement (14) pour les roues de guidage en profondeur (11) s'étendant obliquement depuis le haut et l'arrière vers l'avant et le bas,
**caractérisée en ce que**
les roues de guidage en profondeur sont fixées sur la fixation pivotante (10) au moyen d'un support sur palier (13) présentant un axe de rotation horizontal (16), l'axe de rotation horizontal (16) des roues de guidage en profondeur (11) étant situé dans le plan de l'axe de pivotement (14) ou avant le plan de l'axe de pivotement (14).

2. Machine selon la revendication 1, **caractérisée en ce que** l'inclinaison (18) de l'axe de pivotement oblique (14) vaut au moins 30°, de préférence environ 37° par rapport à la verticale (19).
